(19) Europäisches Patentamt / European Patent Office / Office européen des brevets

(11) **EP 3 691 393 B1**

(12) **EUROPEAN PATENT SPECIFICATION**

(45) Date of publication and mention of the grant of the patent:
**24.06.2026 Bulletin 2026/26**

(21) Application number: **18862762.4**

(22) Date of filing: **03.09.2018**

(51) International Patent Classification (IPC):
**H04W 74/0833** *(2024.01)*   **H04W 74/00** *(2009.01)*

(52) Cooperative Patent Classification (CPC):
**H04W 74/0833; H04W 74/006**

(86) International application number:
**PCT/CN2018/103856**

(87) International publication number:
**WO 2019/062481 (04.04.2019 Gazette 2019/14)**

(54) **RANDOM ACCESS PARAMETER DETERMINATION METHOD AND DEVICE**

DIREKTZUGRIFFSPARAMETERBESTIMMUNGSVERFAHREN UND -VORRICHTUNG

PROCÉDÉ ET DISPOSITIF DE DÉTERMINATION DE PARAMÈTRES D'ACCÈS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2017 CN 201710901419**

(43) Date of publication of application:
**05.08.2020 Bulletin 2020/32**

(73) Proprietor: **ZTE Corporation**
Shenzhen, Guangdong 518057 (CN)

(72) Inventors:
• **DONG, Fei**
Shenzhen
Guangdong 518057 (CN)
• **CHEN, Zhongming**
Shenzhen
Guangdong 518057 (CN)
• **HUANG, He**
Shenzhen
Guangdong 518057 (CN)

(74) Representative: **Vossius & Partner**
**Patentanwälte Rechtsanwälte mbB**
**Siebertstraße 3**
**81675 München (DE)**

(56) References cited:
CN-A- 102 291 836    CN-A- 102 378 389
CN-A- 102 761 933    CN-A- 107 041 014
US-A1- 2010 309 877   US-A1- 2011 274 040
US-A1- 2013 058 301

• CMCC ET AL: "Differentiate access causes in RACH backoff", 3GPP DRAFT; R2-082547 DIFFERENTIATE ACCESS CAUSES IN RACH BACKOFF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080429, 29 April 2008 (2008-04-29), XP050140219
• QUALCOMM ET AL: "Converged proposal for prioritized random access for NR", vol. RAN WG2, no. Berlin, Germany; 20170821 - 20170825, 20 August 2017 (2017-08-20), XP051318525, Retrieved from the Internet <URL:http://www.3gpp.org/ftp/Meetings_3GPP_SYNC/RAN2/Docs/> [retrieved on 20170820]

EP 3 691 393 B1

## Description

### TECHNICAL FIELD

The present application relates to, but is not limited to, the field of communications and, in particular, relates to a random access parameter determination method and device. More particularly, the present application relates to random access parameter determination methods and random access parameter determination devices.

### BACKGROUND

In the LTE system, before user equipment (UE) in a connection state transmits data to a base station, the UE needs acquire uplink synchronization and downlink synchronization with the base station. When a measurement has been performed on a certain cell by the UE, that is, downlink synchronization with the cell is acquired. Otherwise, a process similar to cell search needs to be implemented. Uplink synchronization is acquired through the implementation of a random access process.

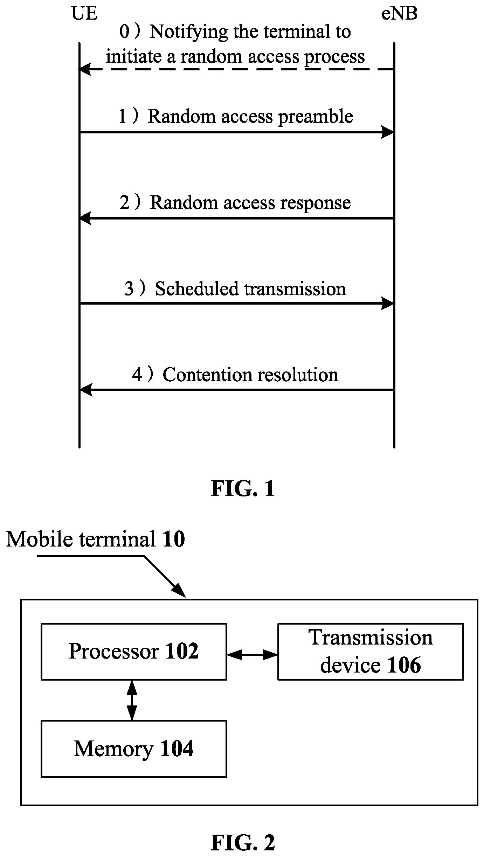

FIG. 1 is a diagram illustrating a random access process in the LTE system in the related art. As shown in FIG. 1, the random access process may be initiated by a physical downlink control channel signaling (e.g. PDCCH order) or a medium access control (MAC) of the UE or radio resource control (RRC) signaling. As shown in the 0-th step in FIG. 1, in some embodiments, the PDCCH order or the RRC signaling may allocate a dedicated random access preamble to the UE, then the random access process is a non-contention manner, and the dedicated random access preamble can only be allocated by the base station, and may be configured through the PDCCH order or switching order. Otherwise, the UE needs to select a random access preamble, and this random access process is a contention manner. On this occasion, the Q-th step does not need to be performed, and the 1st step is performed directly. The random access resource selected by the UE includes the random access preamble, time-frequency domain resources of a physical random access channel (PRACH) and the like. Transmitting a preamble code in the selected random access resource is referred to as transmitting message 1. For the non-contention random access process, there is no contention resolution process, and the non-contention random access process is achieved by allocating a dedicated preamble code to a terminal through a network side. The contention-based random access process is shown in FIG. 1. The process includes four steps. Step 3 and step 4 are used for resolving contention. Non-contention process only includes the first two steps. If the terminal does not receive a random access response (RAR), or the received RAR does not match with the transmitted preamble, the RAR needs to be retransmitted. If the terminal receives a backoff indication, a backoff time is randomly selected, according to a rule, in a maximum backoff time range corresponding to the backoff indication. After the backoff time passes, the random access process is reinitiated. For an power adopted during retransmission, an initial power is increased by a fixed offset according to a power ramping parameter received by the terminal, and then the increased initial power is sent.

To meet the higher, faster and newer communication demands predictable in the future, the industry has begun to carry out research on the future new radio (NR) technology. The NR will be further researched in terms of greater throughput, more user connections, a lower latency, higher reliability and lower power consumption (including lower power consumption in network devices and lower power consumption in user terminals). At present, the industry proposes the technical goal of the NR: to increase mobile data traffic by 1000 times per region, increase the throughput by 10 to 100 times per UE, increase the number of connected devices by 10 to 100 times, lengthen a battery service life by 10 times for a low-power device and decrease an end-to-end latency by 5 times by around 2020. From the perspective of an application scenario, the NR will adopt a unified technical architecture to support an enhanced mobile broadband (eMBB) service, a massive machine type communication (mMTC) service and an ultra reliable and low latency (URLLC) service. The NR will perform system networking at a carrier frequency higher than frequencies used in the LTE system and systems before. Frequency bands which are currently widely recognized in the industry and by international organizations are mainly 3 GHz to 6 GHz and 6 GHz to 100 GHz. These frequency bands substantially belong to a centimeter band or a millimeter band, and the propagation characteristic of these frequency bands is significantly different from the propagation characteristic of lower frequency bands. Since the propagation loss of the higher frequency bands is significantly greater than the propagation loss of the lower frequency bands, generally the coverage range of the higher frequency bands is significantly smaller than the coverage range of the lower frequency bands.

However, the contention of a radio access scenario is further increased in scenarios of multiple radio environments having multiple services and multiple demands in the NR. Therefore, how to solve the severe radio contention in the radio access scenario is a problem. US 2011/0274040 A1 provides an example of random access, in which a parameter, such as backoff time may be WTRU-specifc, WTRU-group specific, or specified per access class.

### SUMMARY

The invention is specified by the independent claims. Preferred embodiments are defined in the dependent claims.

Embodiments of the present application provide a random access parameter determination method and device to solve at least the problem of how to determine a random access channel (RACH) parameter in scenarios having multiple services, multiple demands and multiple radio environments in the NR in the related art.

In the present application, the random access basic parameter and/or the compensation parameter for the random access basic parameter, and mapping relation between the UACC and the random access basic parameter and/or the compensation parameter for the random access parameter are acquired; and the RACH parameter used in the current access process is determined according to the random access basic parameter and/or the compensation parameter for the random access basic parameter and the mapping relation. In this manner, the problem of how to determine the adopted RACH parameter in scenarios having multiple services, multiple demands and multiple radio environments in the NR in the related art is solved; and the following purpose is achieved: in the NR system, for terminals having different demands in different services and different radio environments, the RACH parameters can be determined, and different access effects can be achieved.

## BRIEF DESCRIPTION OF DRAWINGS

The drawings described herein are used to provide a further understanding of the present application and form a part of the present application. The illustrative embodiments and descriptions thereof in the present application are used to explain the present application and not to limit the present application in any improper way. In the drawings:

FIG. 1 is a diagram illustrating a random access process in the LTE system in the related art;
FIG. 2 is a block diagram of a hardware structure of a mobile terminal used for a random access parameter determination method according to embodiments of the present application;
FIG. 3 is flowchart one of a random access parameter determination method according to embodiments of the present application;
FIG. 4 is flowchart two of a random access parameter determination method according to embodiments of the present application;
FIG. 5 is a diagram illustrating that a terminal acquires a BI parameter in a random access process according to embodiments of the present application;
FIG. 6 is a flowchart illustrating that a terminal acquires a power ramping parameter in a random access process according to embodiments of the present application;
FIG. 7 is a flowchart illustrating that a terminal acquires a power ramping parameter and a backoff compensation parameter in a random access process according to embodiments of the present application; and
FIG. 8 is a block diagram of a random access parameter determination device according to embodiments of the present application.

## DETAILED DESCRIPTION

The present application will be described hereinafter in detail with reference to the drawings and in conjunction with embodiments. It is to be noted that if not in collision, the embodiments and features therein in the present application can be combined with each other.

It is to be noted that the terms "first", "second" and the like in the description, claims and drawings of the present application are used to distinguish between similar objects and are not necessarily used to describe a particular order or sequence.

A method embodiment provided by embodiment one of the present application may be executed in a mobile terminal, a computer terminal or other similar computing apparatuses. Taking the method to be executed in a mobile terminal as an example, FIG. 2 is a block diagram of a hardware structure of a mobile terminal used for a random access parameter determination method according to embodiments of the present application. As shown in FIG. 2, the mobile terminal 10 may include one or more (only one is shown in FIG. 2) processors 102 (the processor 102 may include, but is not limited to, a processing device such as a microprocessor (MCU) or a programmable logic device (e.g. FPGA)), a memory 104 used for storing data, and a transmission apparatus 106 used for implementing a communication function. It should be understood by those skilled in the art that the structure shown in FIG. 2 is merely illustrative and not intended to limit the structure of the electronic apparatus described above. For example, the mobile terminal 10 may further include more or fewer components than the components shown in FIG. 2 or may have a configuration different from the configuration shown in FIG. 2.

The memory 104 may be configured to store software programs and modules of application software, such as program instructions/modules corresponding to the data transmission method in embodiments of the present application. The processors 102 execute the software programs and modules stored in the memory 104 to perform functional applications and data processing, that is, to implement the method described above. The memory 104 may include a high-speed random access memory, and may further include a nonvolatile memory such as one or two magnetic storage devices, flash memories or other nonvolatile solid-state memories. In some examples, the memory 104 may further include memories that are remotely disposed with respect to the processors 102. These remote memories may be connected to the mobile terminal 10 via a network. Examples of the above network include, but are not limited to, the Internet, an intranet, a local area network, a mobile communication network and a combination thereof.

The transmission apparatus 106 is configured to receive or transmit data via a network. Examples of the above network may include a radio network provided by a communication provider of the mobile terminal 10. In one example, the transmission apparatus 106 includes a network interface controller (NIC), which may be connected to other network equipment via a base station and thus be capable of communicating with the Internet. In one example, the transmission apparatus 106 may be a radio frequency (RF) module, which is used for communicating with the Internet in a radio way.

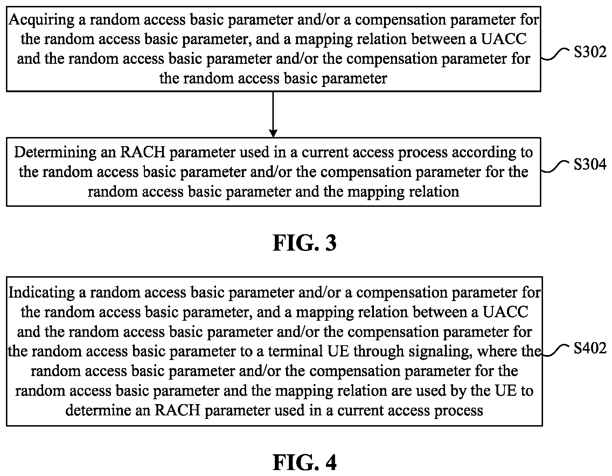

Based on the above mobile terminals, embodiments of the present application provide a random access parameter determination method. FIG. 3 is flowchart one of a random access parameter determination method according to embodiments of the present application. As shown in FIG. 3, the method includes the steps described below.

In step S302, a random access basic parameter and/or a compensation parameter for the random access basic parameter, and a mapping relation between a UACC and the random access basic parameter and/or the compensation parameter for the random access basic parameter are acquired.

In step S304, an RACH parameter used in a current access process is determined according to the random access basic parameter and/or the compensation parameter for the random access basic parameter and the mapping relation.

Through the above steps, the random access basic parameter and/or the compensation parameter for the random access basic parameter, and the mapping relation between the UACC and the random access basic parameter and/or the compensation parameter for the random access parameter are acquired; and the RACH parameter used in the current access process is determined according to the random access basic parameter and/or the compensation parameter for the random access basic parameter and the mapping relation. In this manner, the problem of how to determine the adopted RACH parameter in scenarios having multiple services, multiple demands and multiple radio environments in the NR in the related art is solved; and the following purpose is achieved: in the NR system, for terminals having different demands in different services and different radio environments, the RACH parameters can be determined, and different access effects can be achieved.

In some embodiments, the steps in which the RACH parameter used in the current access process is determined according to the random access basic parameter and/or the compensation parameter for the random access basic parameter and the mapping relation include the steps described below.

A UACC of the current access is determined.

A corresponding random access basic parameter and/or a corresponding compensation parameter for the random access basic parameter are selected according to the determined UACC and the mapping relation.

An actual parameter used in a random access process is calculated according to the selected random access basic parameter and/or the selected compensation parameter for the random access basic parameter.

In some embodiments, the UACC in the current access is determined according to at least one of the following factors: a service initiated this time, a priority of a terminal UE, subscription information or category of the UE, and slice information of the service initiated this time.

A network is configured through signaling. The signaling includes RRC signaling, MAC signaling, and physical layer signaling. The RRC signaling is a system message or dedicated signaling.

In some embodiments, mapping relation between the UACC and the random access basic parameter and/or the compensation parameter for the random access basic parameter is configured by a network side through at least one of the manners described below.

In accordance with the claims, same or different random access basic parameters and/or compensation parameters for the random access basic parameters are configured for different UACCs.

At least one set of random access basic parameters and/or compensation parameters for the random access basic parameters is configured, and an applicable UACC identifier is configured for each of the at least one set of random access basic parameters and/or compensation parameters for the random access basic parameters.

Configuration identifiers of same or different random access basic parameters and/or compensation parameters for the random access basic parameters are configured for different UACCs. The configuration identifiers are used for indexing the random access basic parameters and/or the compensation parameters for the random access basic parameters.

A set of basic parameters and/or compensation parameters is configured. The random access basic parameters and/or the compensation parameters for the random access basic parameters are applicable to all UACCs.

A set of random access basic parameters is configured. The random access basic parameters are effective for all UACCs, and meanwhile, different compensation parameters for the random access basic parameters are configured for different UACCs.

In some embodiments, the step in which the random access basic parameter and/or the compensation parameter for the random access basic parameter, and mapping relation between the UACC and the random access basic parameter and/or the compensation parameter for the random access basic parameter are acquired includes the step described below.

A user category of an initiated service is determined. A random access basic parameter and/or a compensation parameter for the random access basic parameter corresponding to the user category of the service are determined according to a preconfigured correspondence between the user category and the random access basic parameter and/or the compensation parameter for the random access basic parameter. The mapping relation is acquired through signaling delivered by a network side. The compensation parameter for the random access basic parameter includes one of the following: the compensation parameter, an index value of the compensation parameter or a weighed value of the compensation parameter.

Alternatively, signaling delivered by a network side is received. The random access basic parameter and/or the compensation parameter for the random access basic parameter and the mapping relation are acquired according to the signaling.

In some embodiments, the step in which the user category of the initiated service is determined includes the step described below.

When a random access process needs to be initiated, the user category of the initiated service is determined according to the UACC.

Alternatively, signaling delivered by a base station is received. The user category of the initiated service is determined according to the signaling.

In some embodiments, the signaling includes RRC signaling, MAC signaling, physical layer signaling, and RAR signaling. The RRC signaling is a system message or dedicated signaling.

In some embodiments, the user category includes an RRC connection rejection processing policy, an RRC connection release processing policy, a UE-based access barring mechanism, a state of a UE, and different quality of service (QoS) requirements.

In some embodiments, an actual parameter used in the random access process is calculated according to the selected random access basic parameter and/or the selected compensation parameter for the random access basic parameter through one of the manners described below.

The actual parameter used in the random access process = a basic parameter configuration + the compensation parameter.

The actual parameter used in the random access process = the basic parameter configuration + a weighed value * the compensation parameter.

The actual parameter used in the random access process = the basic parameter configuration * a compensation parameter.

In some embodiments, the actual parameter includes at least one of: a backoff parameter, a power ramping parameter, a maximum number of attempts to transmit a preamble, a size of an RAR window, or an initial transmission power of an RACH.

In some embodiments, the method further includes the steps described below.

Signaling delivered by a base station is received. A power ramping parameter in a random access process is acquired according to the signaling. The power ramping parameter is used for indicating an access priority.

A transmission power of retransmission in a next random access process is determined according to the power ramping parameter.

In some embodiments, after the RACH parameter used in the current access process is determined according to the random access basic parameter and/or the compensation parameter for the random access basic parameter and the mapping relation, the method further includes the step described below.

Time-frequency domain resources and power for message transmission are selected according to the determined RACH parameter.

Another embodiment of the present application further provides a random access parameter determination method. FIG. 4 is flowchart two of a random access parameter determination method according to embodiments of the present application. As shown in FIG. 4, the method includes the step described below.

In step S402, a random access basic parameter and/or a compensation parameter for the random access basic parameter, and a mapping relation between a UACC and the random access basic parameter and/or the compensation parameter for the random access basic parameter are indicated to a terminal UE through signaling. The random access basic parameter and/or the compensation parameter for the random access basic parameter and the mapping relation are used by the UE to determine an RACH parameter used in a current access process.

In some embodiments, before the random access basic parameter and/or the compensation parameter for the random access basic parameter, and the mapping relation between the UACC and the random access basic parameter and/or the compensation parameter for the random access basic parameter are indicated to the terminal UE through the signaling, the method further includes the step described below.

The mapping relation between the UACC and the random access basic parameter and/or the compensation parameter for the random access basic parameter is configured through at least one of the manners described below.

Same or different random access basic parameters and/or compensation parameters for the random access basic parameters are configured for different UACCs.

At least one set of random access basic parameters and/or compensation parameters for the random access basic parameters are configured, and an applicable UACC identifier is configured for each of the at least one set of random access basic parameters and/or compensation parameters for the random access basic parameters.

Configuration identifiers of same or different random access basic parameters and/or compensation parameters for the random access basic parameters are configured for different UACCs. The configuration identifiers are used for indexing the random access basic parameters and/or the compensation parameters for the random access basic parameters.

A set of random access basic parameters and/or compensation parameters is configured. The random access basic parameters and/or the compensation parameters for the random access basic parameters are applicable to all UACCs.

A set of random access basic parameters is configured. The random access basic parameters are effective for all UACCs, and meanwhile, different compensation parameters for the random access basic parameters are configured for different UACCs.

In some embodiment, before the random access basic parameter and/or the compensation parameter for the random access basic parameter are indicated to the terminal UE through the signaling, the method further includes the step described below.

A correspondence between a user category and the random access basic parameter and/or the compensation parameter for the random access basic parameter is configured. The correspondence is used by the UE to determine the random access basic parameter and/or the compensation parameter for the random access basic parameter corresponding to the user category of a service.

In some embodiments, the user category includes an RRC connection rejection processing policy, an RRC connection release processing policy, a UE-based access barring mechanism, a state of a UE and different QoS requirements.

In some embodiments, the signaling includes RRC signaling, MAC signaling, physical layer signaling, and RAR signaling. The RRC signaling is a system message or dedicated signaling.

In the NR, 3GPP determines to adopt a new user category to implement access control. The category may include multiple factors, for example, a call type used for access control in the LTE and new contents in the NR such as an RRC connection rejection processing policy, an RRC connection release process policy, a UE-based access barring mechanism, a state of a UE, and different QoS requirements. 3GPP configures different user categories according to these factors. Each of the categories may include same or different call types, the RRC connection rejection process policy, the RRC connection release process policy, the UE-based access barring mechanism, the state of the UE, and different QoS requirements. Therefore, a method for achieving the configuration of multiple sets of RACH parameters is adopted. A RACH parameter is configured according to the brand new user category. That is, at least one user category may have at least one set of RACH parameters, and the terminal selects a set of parameters according to the user category of the terminal, and the configuration and/or the indication of the base station.

The present application describes a method in which different categories having different RACH parameters are achieved through the preconfigured UACC and the control of the network signaling.

In this design, different categories have different RACH parameters, so that different QoS requirements are satisfied. Different terminal categories require different access control and processing policies. A UACC is relatively fixed, but for a cell, the number of the terminal accessed to each service and the total number of the services is changing constantly, so a network side is adopted and signaling is added to control an RACH parameter in an access control category and satisfy the changing network environment.

According to the network demand, the UACC has determined number of sets of parameter configurations as compensation parameters. The network provides a basic parameter configuration through signaling according to the current network environment. A compensation parameter index number may be included. The terminal obtains the corresponding RACH parameter through a specified calculation according to the received basic parameter configuration and/or the compensation parameter index number.

The UACC has a determined number of sets of parameter configurations. The base station notifies the terminal through RRC signaling or a system message.

The network specifies the basic parameter configuration through the signaling. The compensation parameter index number may be included. The base station may notify the terminal through the existing signaling such as the RAR signaling, or the system message.

The specified calculation includes but is not limited to the calculation manners described below. RACH parameters = basic parameters + compensation parameters.

RACH Parameters = basic parameters + weighed values * compensation parameters.

RACH Parameters = basic parameters * compensation parameters (in accordance with the claims).

In embodiments of the present application, , finite RACH parameter configurations are configured in a UACC, through low signaling overheads at the network side, in multiple sets of RACH parameters such as a backoff parameter and a power parameter, the terminal may select a set of parameters suitable for the terminal and satisfying the requirement of the base station. In this manner, the following purpose is achieved: in the NR system, for terminals having different demands in different services and different radio environments, different access effects can be achieved.

The following describes embodiments of the present application in detail by using examples.

Example one

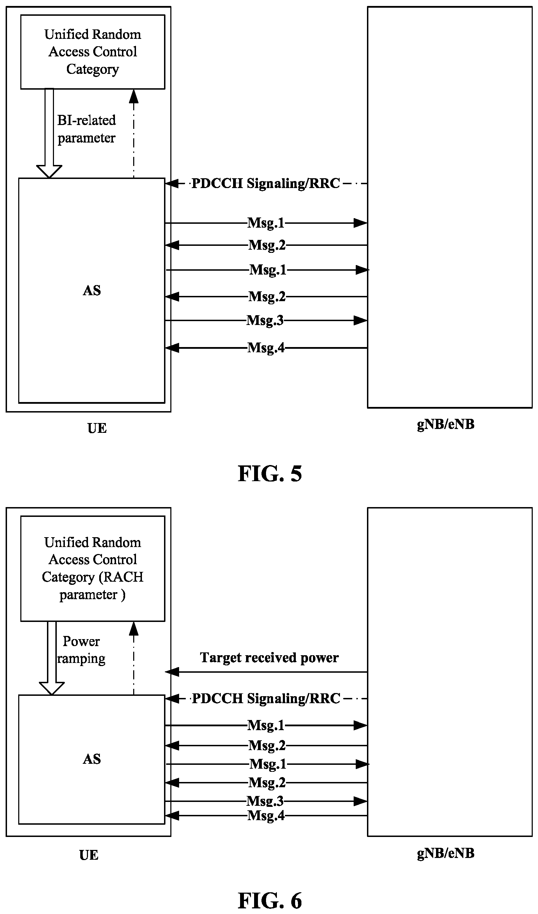

FIG. 5 is a schematic diagram illustrating that a terminal acquires a BI parameter in a random access process according to embodiments of the present application. As shown in FIG. 5, the steps include the steps describe below.

In step 1, after the terminal normally camps in an NR cell or enters the connection state in the NR cell, the configurations of user categories and BI-related parameters are acquired through a system message or an RRC message. For example, the user categories and the BI-related parameters are shown in the following table, and the unit is microsecond (*ms*). The configuration in Table 1 may be used to configure different random access parameters through different access control categories, or used to configure different access control categories for different random access parameters. The values in Table 1 reduce the probability of access conflicts between different categories of terminals when terminals of different UACCs implement a backoff algorithm. The values in Table 1 are only one example, and other values may be provided as long as the backoff values are designed according to the principle of the present application.

Table 1.

|  | BI Delta1 | BI Delta 2 | BI Delta 3 | BI Delta 4 | BI Delta 5 |
|---|---|---|---|---|---|
| Category 1 | 0 | 0 | 0 | 0 | 0 |
| Category 2 | 0.5 | 1 | 2 | 4 | 8 |
| Category 3 | 1 | 2 | 4 | 8 | 16 |
| Category 4 | 1.5 | 3 | 6 | 12 | 32 |
| Category 5 | 2 | 4 | 8 | 16 | 64 |

In step 2, when the terminal needs to initiate a random access process, the terminal determines the category of the service initiated this time according to the UACC, and acquires the corresponding RACH parameter according to the category to which the category of the service belongs. Here the RACH parameter is the backoff compensation parameter.

Alternatively, the terminal receives an access network element. Here the access category is acquired according to the command of an eNode B (eNB) or a gNode B (gNB), and the terminal acquires the RACH parameter according to the corresponding category. Here the RACH parameter is the backoff compensation parameter.

In step 3, the terminal selects time-frequency domain resources and power for transmitting msg1 according to the selected RACH parameter.

In step 4, the terminal waits to receive the RAR and detects that the eNB or the gNB notifies the terminal of a backoff basic parameter BI and a backoff compensation parameter BI delta through the RAR signaling (e.g. RAR MAC PDU). In the present embodiment, the information of the backoff basic value BI and the compensation parameter BI delta are included in the RAR MAC PDU transmitted to the terminal.

In step 5, the terminal calculates a preamble retransmission backoff time through the BI and the value of the BI delta carried in the RAR MAC PDU. At this time, if the terminal does not receive the RAR MAC PDU within an RAR response window, the backoff value Backoff = 0. Alternatively, the basic parameter BI and the compensation parameter BI delta may be configured together in Table 1. As long as the terminal does not detect the RAR and the RAR needs to be retransmitted, the terminal acquires the RACH parameter according to the category of the terminal or the category indicated by the previous base station.

When the BI and the BI delta are NULL, for all access categories, the backoff value Backoff = NULL + NULL = 0.

When the BI is indicated as 10 ms, and the BI delta is NULL, for all access categories, the backoff value Backoff = 10 + NULL = 10.

When the BI is indicated as NULL, and the BI delta = 5, the backoff values of services of different access categories are acquired by the addition of corresponding categories after the corresponding categories are selected. For example, for the Category 1, the backoff value Backoff = NULL + 0 = 0; for the Category 2, for the Category 2, the backoff value Backoff = Null + 8 = 8, and so on; or for the Category 1, the backoff value Backoff = NULL + a * 0 = 0; for the Category 2, for the Category 2, the backoff value Backoff = Null + a * 8 = 8a, where a is a fixed value, and so on.

When the BI is indicated as 10 ms, and the BI delta = 5, the backoff values of services of different access categories are acquired by the addition of the BI and the corresponding BI delta after the corresponding BI delta is selected. For example, for the Category 1, the backoff value Backoff = 10 + 0 = 10; for the Category 2, the backoff value Backoff = 10 + 8 = 18, and so on; or for the Category 1, the backoff value Backoff = 10 + a * 0 = 10; for the Category 2, the backoff value Backoff = 10 + a * 8 = 10 + 8a, where a is a fixed value, and so on.

In step 6, the terminal schedules a next preamble retransmission by using the backoff value acquired in step 5. When the backoff value is equal to 0, the user can immediately schedule the preamble retransmission. When the backoff value is not equal to 0, the terminal randomly with equal probability selects a certain time point within a time range from 0 to the backoff value to schedule the preamble retransmission.

In step 7, the terminal reinitiates one RACH process.

Example two

In step 1, after the terminal normally camps in an NR cell or enters the connection state in the NR cell, the configurations of user categories and/or BI-related parameters are acquired through a system message or an RRC message. For example, values of the BI index are shown in the following table. According to the values of the BI index, a specific time corresponding to the BI may be found according to relevant regulations. The values in Table 2 are just one example, and other values may be provided.

Table 2.

|  | BI Index |
| --- | --- |
| Category 1 | 1 |
| Category 2 | 2 |
| Category 3 | 4 |
| Category 4 | 7 |
| Category 5 | 8 |

In step 2, when the terminal needs to initiate a random access process, the terminal determines the category of the service initiated this time according to the UACC, and acquires the corresponding RACH parameter according to the category to which the category of the service belongs. Here the RACH parameter is the backoff compensation parameter.

Alternatively, the terminal receives an access network element. Here the access category is acquired according to the command of an eNB or a gNB, and the terminal acquires the RACH parameter according to the corresponding category. Here is the RACH parameter is the backoff compensation parameter.

In step 3, the terminal selects time-frequency domain resources and power for transmitting msg1 according to the selected RACH parameter.

In step 4, the terminal waits to receive the RAR, and detects that the eNB or the gNB notifies, through the RAR MAC PDU, the terminal to implement backoff. Only one bit of indication information may be included. At this time, if the terminal does not receive the RAR MAC PDU within an RAR response window, the backoff value Backoff = 0. Alternatively, as long as the terminal does not detect the RAR and the RAR needs to be retransmitted, the terminal acquires the RACH parameter according to the category of the terminal or the category indicated by the previous base station. At this time, the RAR including the BI may not be transmitted.

In step 5, the terminal acquires the value of BI required in the current access process through Table 2 according to the access category determined in step 2.

For example, the BI index of Category 1 is 1, which corresponds to 10ms according to the relevant regulations. Therefore, the backoff value Backoff= 10ms for users of Category 1; the BI index of Category 3 is 4, which corresponds to 40ms in the relevant regulations. Therefore, the backoff value Backoff = 40ms for users of Category 3.

In step 6, the terminal schedules a next preamble retransmission by using the backoff value acquired in step 5. When the backoff value is equal to 0, the user can immediately schedule the preamble retransmission. When the backoff value is not equal to 0, the terminal randomly with equal probability selects a certain time point within a time range from 0 to the backoff value to schedule the preamble retransmission.

In step 7, the terminal reinitiates one RACH process.

Example three

In step 1, after the terminal normally camps in an NR cell or enters the connection state in the NR cell, the configuration of user categories and/or BI-related parameters are acquired through a system message or an RRC message. For example, the user categories and/or the BI-related parameters are shown in Tables 3-1 and Table 3-2. The configuration in Table 3-1 may be to configure different random access parameters through different access control categories. The configuration in Table 3-2 may be to configure different access control categories for different random access parameters. The BI weighed values are included in Table 3-1 and Table 3-2. The values in Table 3 are just one example, and other values may be provided.

Table 3-1.

|  | BI Delta Weighed Value |
|---|---|
| Category 1 | 1 |
| Category 2 | 2 |
| Category 3 | 4 |
| Category 4 | 7 |
| Category 5 | 8 |

Table 3-2.

| BI Delta Weighed Value | 2 | 1 | 7 | 4 | 8 |
|---|---|---|---|---|---|
|  | Category 2 | Category 1 | Category 4 | Category 3 | Category 5 |

In step 2, when the terminal needs to initiate a random access process, the terminal determines the category of the service initiated this time according to the UACC, and acquires the corresponding RACH parameter according to the category which the category of the service belongs. Here the RACH parameter is the backoff compensation parameter.

Alternatively, the terminal receives an access network element. Here the access category is acquired according to the command of an eNB or a gNB, and the terminal acquires the RACH parameter according to the corresponding category. Here is the RACH parameter is the backoff compensation parameter.

In step 3, the terminal selects time-frequency domain resources and power for transmitting msg1 according to the selected RACH parameter.

In step 4, the terminal waits to receive the RAR, and detects that the eNB or the gNB notifies, through the RAR MAC PDU, the terminal to implement backoff. Only one piece of BI indication information may be included. At this time, if the terminal does not receive the RAR MAC PDU within an RAR response window, the backoff value Backoff= 0.

In step 5, by using the indication in the RAR, such as Category 2 for this time, and the backoff time is acquired to be 20ms by checking the relevant regulations. Then the terminal acquires the BI weighed value required in the current access process through Table 3 according to the access category determined in step 2.

For example, the BI delta of Category 2 is 2, so the backoff value = 20 ms * 2 = 40 ms for users of the Category 2; the BI delta of Category 3 is 4, so the backoff value = 20 ms * 4 = 80 ms for users of the Category 3.

In step 6, the terminal schedules a next preamble retransmission by using the backoff value acquired in step 5. When the backoff value is equal to 0, the user can immediately schedule the preamble retransmission. When the backoff value is not equal to 0, the terminal randomly with equal probability selects a certain time point within a time range from 0 to the backoff value to schedule the preamble retransmission.

In step 7, the terminal reinitiates one RACH process.

Example four

FIG. 6 is a flowchart illustrating that a terminal acquires a power ramping parameter in a random access process according to embodiments of the present application. As shown in FIG. 6, the steps include the steps described below.

In step 1, after the terminal normally camps in an NR cell or enters the connection state in the NR cell, the configurations of user categories and/or power ramping-related parameters are acquired through a system message or an RRC message. For example, the user categories and/or the power ramping-related parameters are shown in the following table, and the unit is decibel(dB). Furthermore, the terminal further acquires, through the base station, an initial transmission power configuration such as *preambleInitialReceivedTargetPower.* According to requirements such as QoS of different categories, different power ramping parameters PowerRamping are configured for different categories to distinguish the access priority. The values in Table 4-1 are only one example, and other values may be provided as long as the values of the PowerRamping are designed according to the principle of the present application.

Table 4-1

|  | Power Ramping 1 | Power Ramping 2 | Power Ramping 3 |
|---|---|---|---|
| Category 1 | 8 dB | 10 dB | 12 dB |
| Category 2 | 6 dB | 8 dB | 10 dB |
| Category 3 | 4 dB | 6 dB | 8 dB |
| Category 4 | 2 dB | 4 dB | 6 dB |
| Category 5 | 0 dB | 2 dB | 4 dB |

In step 2, when the terminal needs to initiate a random access process, the terminal determines the category of the service initiated this time according to the UACC, and acquires the corresponding RACH parameter according to the category to which the category of the service belongs. Here the RACH parameter is the power ramping compensation parameter.

Alternatively, the terminal receives an access network element. Here the access category is acquired according to the command of an eNB or a gNB, and the terminal acquires the RACH parameter according to the corresponding category. Here is the RACH parameter is the power ramping compensation parameter.

In step 3, the terminal selects time-frequency domain resources and power for transmitting msg1 according to the selected RACH parameter.

The terminal calculates an initial random access transmission preamble power according to a target received power *preambleInitialReceivedTargetPower* and the power ramping parameter PowerRamping. It is assumed that when the target received power *preambleInitialReceivedTargetPower* = - 110 dBm and the PowerRampingadopts the default power ramping 2 (also may be power ramping 1), the default parameter of the PowerRamping may be notified to the terminal through a system message or RRC signaling. In this manner, the calculation result of the initial transmission preamble power of terminals of each category is shown in Table 4-2.

Table 4-2.

| Category | Transmission Power |
|---|---|
| Category 1 | - 110 dBm + pathloss +10 or - 110 dBm + pathloss + b * 10 |
| Category 2 | - 110 dBm + pathloss + 8 or - 110dBm + pathloss + b * 8 |
| Category 3 | - 110 dBm + pathloss + 6 or - 110 dBm + pathloss + b * 6 |
| Category 4 | - 110 dBm + pathloss + 4 or -110dBm + pathloss + b * 4 |
| Category 5 | - 110 dBm + pathloss + 2 or - 110 dBm + pathloss + b * 2 |

The pathloss is estimated by the terminal according to a downlink reference signal, and b is a fixed weighed value and may be specified in advance. Furthermore, the power ramping is implemented for the UE in the first transmission, so that the access success rate of the access category with a high priority is improved.

In step 4, the terminal waits to receive the RAR, and detects that the eNB or the gNB notifies, through the RAR MAC PDU, the terminal to implement backoff. The processing for the backoff may be referred to the above examples one, two and three. Alternatively, if the terminal does not receive the RAR MAC PDU within an RAR response window, the above two categories enters the step for retransmission.

In step 5, when the terminal determines that the power ramping condition is satisfied, the terminal ramps the preamble transmission power for the next time according to the corresponding PowerRamping and the access category determined in step 2. For the present embodiment, it is assumed that when the retransmission is implemented by a terminal belonging to Category 2 and the power ramping (PowerRamping) condition is satisfied, the transmission power P * used by the preamble retransmission of the next time is calculated as below.

$$P * = - 110 \text{ dBm} + pathloss + 8 + 8 \text{ or } P * = - 110 \text{ dBm} + pathloss + b * 8 + b * 8.$$

When the terminal does not exceed a maximum number of retransmissions and the power ramping condition is satisfied, the power ramping is implemented for each retransmission according to the PowerRamping of the corresponding access category in the UACC.

In step 6, the terminal schedules a next preamble retransmission by using the power value acquired in step 5.

In step 7, the terminal reinitiates one RACH process.

Example five

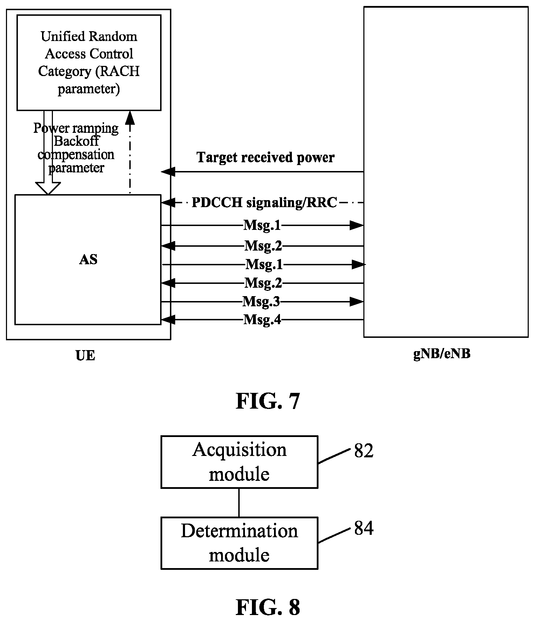

FIG. 7 is a flowchart illustrating that a terminal acquires a power ramping parameter and a backoff compensation parameter in a random access process according to embodiments of the present application. As shown in FIG. 7, the steps include the steps described below.

In step 1, after the terminal normally camps in an NR cell or enters the connection state in the NR cell, the configurations of user categories and/or RACH parameter index are acquired through a system messages or an RRC message. For example, in Table 5-1 and Table 5-2, different RACH parameters indexes are configured for different categories according to the adaptation to different network environments, and the different network environments are adapted according to different RACH parameters mapped by the different indexes. Table 5-1 and Table 5-2 include, but are not limited to the number of indexes and the mapping relation type. The values in Table 5-1 and Table 5-2 are only one example, and other values may be provided as long as the RACH parameters are designed according to the principle of the present application.

Table 5-1.

| RACH Parameters Index | 1 | 2 | 3 | 4 |
|---|---|---|---|---|
| BI delta | 1 | 2 | 4 | 8 |
| PowerRampingStep | 8 | 10 | 12 | 14 |

Table 5-2.

| | RACH Parameters 1 | RACH Parameters 2 | RACH Parameters 3 | RACH Parameters 4 |
|---|---|---|---|---|
| Category 2 | Index 1 | Index 2 | Index 3 | Index 4 |

In step 2, when the terminal needs to initiate a random access process, the terminal determines the category of the service initiated this time according to the UACC. It is assumed that the terminal belongs to Category 2 in the UACC, and then the corresponding RACH parameter index is acquired according to the corresponding associated category.

In step 3, the terminal selects time-frequency domain resources and power for transmitting msg1 according to the selected RACH parameter.

The terminal calculates an initial random access transmission preamble power according to a target received power *preambleInitialReceivedTargetPower* and the power ramping parameter PowerRamping. It is assumed that when the target received power *preambleInitialReceivedTargetPower* = - 110 dBm and the PowerRamping adopts the default RACH parameters 2 (also may be RACH parameter 1), the default value of the PowerRamping may be notified to the user through a system message. As shown in Table 5-2, the corresponding terminal access parameter belongs to Index 2, and then through the PowerRampingStep mapped by the Index 2, the initial transmission power of the terminal preamble of Category 2 is: - 110 dBm + pathloss + 10 or - 110 dBm + pathloss + b * 10.

The pathloss is estimated by the terminal according to a downlink reference signal, and b is a fixed weighed value and may be specified in advance. Furthermore, the power ramping is implemented for the UE in the first transmission, so that the access success rate of the access category with a high priority is improved.

In step 4, the terminal waits to receive the RAR and detects that the eNB or the gNB notifies the terminal of a backoff basic parameter BI and an RACH parameter index value through the RAR signaling (e.g. RAR MAC PDU). In the present embodiment, the information of the backoff basic value BI and the RACH parameter value are included in the RAR MAC PDU transmitted to the terminal.

In step 5, the terminal acquires an RACH parameter index through the RACH parameter value carried in the RAR MAC PDU and the access control category of the user obtained through Table 5-2. The corresponding BI delta and the BI basic indication value carried in the RAR MAC PDU are acquired through Table 5-1 to calculate the backoff time of the preamble retransmission. At this time, if the terminal does not receive the RAR MAC PDU within an RAR response window, the backoff value is the value of the BI delta corresponding to the index mapped by the RACH parameter 2 as default in step 3, that is, 2 ms or 2 * a ms, where a is a fixed weighed value.

When the BI and the RACH parameter value are NULL, the actual value of backoff of the terminal Backoff= NULL + BI delta = 2 ms or Backoff = NULL + a * BI delta = 2a, where the BI delta is the value of the RACH parameter 2 as default in step 3.

When the BI is indicated as 10 ms and the RACH parameter value is NULL, the actual backoff value of the terminal =10 + BI delta =12 or the backoff value = NULL + a * BI delta = 2a, where the BI delta is the value of the RACH parameter Index 2 as default in step 3.

When the BI is indicated as Null and the RACH parameter = 3, as shown in Table 5-2, the terminal should adopt the RACH parameter with an index of 3 and the BI delta = 4 ms may be acquired through the mapping relation shown in Table 5-1, and then the actual value of the backoff of the terminal Backoff= Null + 4 = 4 ms, or Backoff = Null + a * 4 = 4a ms.

When the BI is indicated as 10 ms, the RACH parameter = 3, as shown in Table 5-2, the terminal should adopt the RACH parameter with an index of 3 and the BI delta = 4 ms may be acquired through the mapping relation shown in Table 5-1, and then the actual value of the backoff of the terminal Backoff= 10 + 4 = 14 ms, or Backoff = 10 + a * 4 = 10 + 4a ms.

In step 6, when the terminal determines that the power ramping condition is satisfied, the terminal ramps the preamble transmission power for the next time according to the corresponding PowerRamping and the access category determined in step 2. For the present embodiment, it is assumed that when the retransmission is implemented by a terminal belonging to Category 2 and the PowerRamping condition is satisfied, the transmission power P * used by the preamble retransmission for the next time is calculated as below.

When the terminal does not receive the RAR or the RACH parameter index in the RAR is NULL, Powerramping as default in step 3 is taken. That is, Pstep =10 dB mapped by the RACH parameter Index 2.

$$P* = -110\ \text{dBm} + \text{pathloss} + 10 + 10 \text{ or } P* = -110\ \text{dBm} + \text{pathloss} + b*10 + b*10.$$

When the terminal receives the RAR and it is indicated that the RACH parameter index = 3, that is, the Pstep =12 dB mapped by an RACH parameter Index 3.

$$P* = -110\ \text{dBm} + \text{pathloss} + 12 + 12 \text{ or } P* = -110\ \text{dBm} + \text{pathloss} + b*12 + b*12.$$

When the terminal does not exceed a maximum number of retransmissions and the power ramping condition is satisfied, the power ramping is implemented for each retransmission according to PowerRamping of the corresponding access category in the UACC.

In step 6, the terminal schedules a next preamble retransmission by using the power value and the backoff time acquired in step 5.

In step 7, the terminal reinitiates one RACH process.

Another embodiment of the present application further provides a random access parameter determination device. FIG. 8 is a block diagram of a random access parameter determination device according to embodiments of the present application. As shown in FIG. 8, the device includes the modules described below.

An acquisition module 82 is configured to acquire a random access basic parameter and/or a compensation parameter for the random access basic parameter, and a mapping of a UACC and the random access basic parameter and/or the compensation parameter for the random access basic parameter.

A determination module 84 is configured to determine an RACH parameter used in a current access process according to the random access basic parameter and/or the compensation parameter for the random access basic parameter and the mapping relation.

In some embodiments, the determination module 84 is further configured to determine a UACC of the current access.

A corresponding random access basic parameter and/or a corresponding compensation parameter for the random access basic parameter are selected according to the determined UACC and the mapping relation.

An actual parameter used in a random access process is calculated according to the selected random access basic parameter and/or the selected compensation parameter for the random access basic parameter.

In some embodiments, the acquisition module 82 includes the units described below.

A determination unit is configured to determine a user category of an initiated service, determine a random access basic parameter and/or a compensation parameter for the random access basic parameter corresponding to the user category of the service according to a preconfigured correspondence between the user category and the random access basic parameter and/or the compensation parameter for the random access basic parameter, and acquire the mapping relation through signaling delivered by a network side. The compensation parameter for the random access basic parameter includes one of the following: the compensation parameter, an index value of the compensation parameter and a weighed value of the compensation parameter.

Alternatively, a receiving unit is configured to receive signaling delivered by a network side and acquire the random access basic parameter and/or the compensation parameter for the random access basic parameter and the mapping relation according to the signaling.

In some embodiments, the determination unit is further configured to, when a random access process needs to be initiated, determine the user category of the initiated service according to the UACC.

Alternatively, the determination unit is configured to receive signaling delivered by a base station and determine the user category of the initiated service according to the signaling.

In some embodiments, the determination module 84 is configured to calculate the actual parameter used in the random access process according to the selected random access basic parameter and/or the selected compensation parameter for the random access basic parameter in the manners described below.

The actual parameter used in the random access process = a basic parameter configuration + the compensation parameter.

The actual parameter used in the random access process = the basic parameter configuration + a weighed value * the compensation parameter.

The actual parameter used in the random access process = the basic parameter configuration * the compensation parameter.

Another embodiment of the present application further provides a random access parameter determination device. The device includes an indication module.

The indication module is configured to indicate a random access basic parameter and/or a compensation parameter for the random access basic parameter, and a mapping relation between a UACC and the random access basic parameter and/or the compensation parameter for the random access basic parameter to a terminal UE through signaling. The random access basic parameter and/or the compensation parameter for the random access basic parameter and the mapping relation are used by the UE to determine an RACH parameter used in a current access process.

In some embodiments, the device further includes a first configuration module.

The first configuration module is configured to configure the mapping relation between the UACC and the random access basic parameter and/or the compensation parameter for the random access basic parameter through at least one of the manners described below.

Same or different random access basic parameters and/or compensation parameters for the random access basic parameters are configured for different UACCs.

At least one set of random access basic parameters and/or compensation parameters for the random access basic parameters is configured, and an applicable UACC identifier is configured for each of the at least one set of random access basic parameters and/or compensation parameters for the random access basic parameters.

Configuration identifiers of same or different random access basic parameters and/or compensation parameters for the random access basic parameters are configured for different UACCs. The configuration identifiers are used for indexing the random access basic parameters and/or the compensation parameters for the random access basic parameters.

A set of basic parameters and/or compensation parameters is configured. The random access basic parameters and/or the compensation parameters for the random access basic parameters are applicable to all UACCs.

A set of random access basic parameters is configured. The random access basic parameters are effective for all UACCs, and meanwhile, different compensation parameters for the random access basic parameters are configured for different UACCs.

In some embodiments, the device further includes a second configuration module.

The second configuration module is configured to configure a correspondence between a user category and the random access basic parameter and/or the compensation parameter for the random access basic parameter. The correspondence is used by the UE to determine the random access basic parameter and/or the compensation parameter for the random access basic parameter corresponding to the user category of a service.

In some embodiments, the user category includes an RRC connection rejection processing policy, an RRC connection release processing policy, a UE-based access barring mechanism, a state of a UE, and different QoS requirements.

In some embodiments, the signaling includes RRC signaling, MAC signaling, physical layer signaling, and RAR signaling. The RRC signaling is a system message or dedicated signaling.

One embodiment of the present application further provides a storage medium. The storage medium includes a stored program. The method of any one of the embodiments described above is performed when the program is executed.

In the embodiment, the storage medium may be configured to store program codes for performing the steps described below.

In step S11, a random access basic parameter and/or a compensation parameter for the random access basic parameter, and a mapping relation between a UACC and the random access basic parameter and/or the compensation parameter for the random access basic parameter are acquired.

In step S12, an RACH parameter used in a current access process is determined according to the random access basic parameter and/or the compensation parameter for the random access basic parameter and the mapping relation.

In the present embodiment, the storage medium may also be configured to store program codes for performing the steps described below.

In step S21, a random access basic parameter and/or a compensation parameter for the random access basic parameter, and a mapping relation between a UACC and the random access basic parameter and/or the compensation parameter for the random access basic parameter are indicated to a terminal UE through signaling. The random access basic parameter and/or the compensation parameter for the random access basic parameter and the mapping relation are used by the UE to determine an RACH parameter used in a current access process.

In the present embodiment, the storage medium may include, but is not limited to, a U disk, a read-only memory (ROM), a random access memory (RAM), a mobile hard disk, a magnetic disk, an optical disk or another medium capable of storing program codes.

One embodiment of the present application further provides a processor. The processor is configured to execute a program. The steps in any one of the methods described above are performed when the program is executed.

In the present embodiment, the program is configured to perform the steps described below.

In step S31, a random access basic parameter and/or a compensation parameter for the random access basic parameter, and a mapping relation between a UACC and the random access basic parameter and/or the compensation parameter for the random access basic parameter are acquired.

In step S32, an RACH parameter used in a current access process is determined according to the random access basic parameter and/or the compensation parameter for the random access basic parameter and the mapping relation.

In the present embodiment, the program is further configured to perform the steps described below.

In step S41, a random access basic parameter and/or a compensation parameter for the random access basic parameter, and a mapping relation between a UACC and the random access basic parameter and/or the compensation parameter for the random access basic parameter are indicated to a terminal UE through signaling. The random access basic parameter and/or the compensation parameter for the random access basic parameter and the mapping relation are used by the UE to determine an RACH parameter used in a current access process.

For specific examples in the present embodiment, reference may be made to the examples described in the above-mentioned embodiments and optional implementation modes, and repetition will not be made in the present embodiment.

Apparently, those skilled in the art should understand that each of the above-mentioned modules or steps of the present application may be implemented by a general-purpose computing apparatus, the modules or steps may be concentrated on a single computing apparatus or allocated on a network formed by two computing apparatuses, and in some embodiments, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or two modules or steps therein may be made into a single integrated circuit module for implementation. In this way, the present application is not limited to any specific combination of hardware and software.

The above are only preferred embodiments of the present application and are not intended to limit the present application, and for those skilled in the art, the present application may have various modifications and variations.

## Claims

1. A random access parameter determination method, comprising:

   acquiring a same random access basic parameter and compensation parameter for the random access basic parameter for different unified access control categories, UACCs, and a mapping relation between a UACC and the same compensation parameter through signaling;
   determining a UACC of a current access;
   selecting a corresponding compensation parameter according to the determined UACC and the mapping relation; and
   calculating an actual parameter used in a random access process according to the acquired random access basic parameter and the selected compensation parameter as follows:

the actual parameter used in the random access process = the acquired random access basic parameter * the selected compensation parameter.

2. The method of claim 1, wherein the UACC of the current access is determined according to a category of the UE.

3. The method of claim 1, wherein an actual parameter comprises a backoff parameter and/or a power ramping parameter.

4. A random access parameter determination method, comprising:

indicating a same random access basic parameter and compensation parameter for the random access basic parameter for different unified access control categories, UACCs, and a mapping relation between a UACC and the same compensation parameter to a terminal User Equipment, UE, through signaling;
wherein the random access basic parameter, the same compensation parameter and the mapping relation are used by the UE to select a corresponding compensation parameter, and calculate an actual parameter used in a random access process according to the random access basic parameter and the selected compensation parameter as follows:

the actual parameter used in the random access process = the random access basic parameter * the selected compensation parameter.

5. A random access parameter determination device, comprising:
an acquisition module (82), which is configured to:

acquire a same random access basic parameter and compensation parameter for the random access basic parameter for different unified access control categories, UACCs, and a mapping relation between a UACC and the same compensation parameter through signaling; and
a determination module (84), which is configured to determine:

a UACC of a current access;
wherein the determination module is further configured to
select a corresponding compensation parameter according to the determined UACC and the mapping relation; and
calculate an actual parameter used in a random access process according to the acquired random access basic parameter and the selected compensation parameter as follows:

the actual parameter used in the random access process = the acquired random access basic parameter * the selected compensation parameter.

6. The device of claim 5, wherein an actual parameter comprises a backoff parameter and/or a power ramping parameter.

7. A random access parameter determination device, comprising:

an indication module, which is configured to indicate: a same random access basic parameter and compensation parameter for the random access basic parameter for different unified access control categories, UACCs, and a mapping relation between a UACC and the same compensation parameter to a terminal User Equipment, UE, through signaling;
wherein the random access basic parameter, the same compensation parameter and the mapping relation are used by the UE to select a corresponding compensation parameter, and calculate an actual parameter used in a random access process according to the random access basic parameter and the selected compensation parameter as follows:

the actual parameter used in the random access process = the random access basic parameter * the selected compensation parameter.

**Patentansprüche**

1. Direktzugriffsparameterbestimmungsverfahren, aufweisend:

   Erfassen eines gleichen Direktzugriffsgrundparameters und Kompensationsparameters für den Direktzugriffsgrundparameter für verschiedene einheitliche Zugriffssteuerungskategorien, UACCs, und einer Zuordnungsbeziehung zwischen einer UACC und dem gleichen Kompensationsparameter durch Signalisierung;
   Bestimmen einer UACC eines aktuellen Zugriffs;
   Auswählen eines entsprechenden Kompensationsparameters gemäß der bestimmten UACC und der Zuordnungsbeziehung; und
   Berechnen eines tatsächlichen Parameters, der in einem Direktzugriffsprozess verwendet wird, gemäß dem erfassten Direktzugriffsgrundparameter und dem ausgewählten Kompensationsparameter wie folgt:

   der tatsächliche Parameter, der in dem Direktzugriffsprozess verwendet wird = der erfasste Direktzugriffsgrundparameter * der ausgewählte Kompensationsparameter.

2. Verfahren nach Anspruch 1, wobei die UACC des aktuellen Zugriffs gemäß einer Kategorie der UE bestimmt wird.

3. Verfahren nach Anspruch 1, wobei ein tatsächlicher Parameter einen Backoff-Parameter und/oder einen Leistungsanstiegsparameter aufweist.

4. Direktzugriffsparameterbestimmungsverfahren, aufweisend:

   Anzeigen eines gleichen Direktzugriffsgrundparameters und Kompensationsparameters für den Direktzugriffsgrundparameter für verschiedene einheitliche Zugriffssteuerungskategorien, UACCs, und einer Zuordnungsbeziehung zwischen einer UACC und dem gleichen Kompensationsparameter an eine Endbenutzereinrichtung, UE, durch Signalisierung;
   wobei der Direktzugriffsgrundparameter, der gleiche Kompensationsparameter und die Zuordnungsbeziehung von der UE verwendet werden, um einen entsprechenden Kompensationsparameter auszuwählen, und einen tatsächlichen Parameter, der in einem Direktzugriffsprozess verwendet wird, gemäß dem Direktzugriffsgrundparameter und dem ausgewählten Kompensationsparameter wie folgt zu berechnen:

   der tatsächliche Parameter, der in dem Direktzugriffsprozess verwendet wird = der Direktzugriffsgrundparameter * der ausgewählte Kompensationsparameter.

5. Direktzugriffsparameterbestimmungsvorrichtung, aufweisend:
   ein Erfassungsmodul (82), das konfiguriert ist zum:

   Erfassen eines gleichen Direktzugriffsgrundparameters und Kompensationsparameters für den Direktzugriffsgrundparameter für verschiedene einheitliche Zugriffssteuerungskategorien, UACCs, und einer Zuordnungsbeziehung zwischen einer UACC und dem gleichen Kompensationsparameter durch Signalisierung; und
   ein Bestimmungsmodul (84), das konfiguriert ist, um zu bestimmen:

   eine UACC eines aktuellen Zugriffs;
   wobei das Bestimmungsmodul ferner konfiguriert ist zum
   Auswählen eines entsprechenden Kompensationsparameters gemäß der bestimmten UACC und der Zuordnungsbeziehung; und
   Berechnen eines tatsächlichen Parameters, der in einem Direktzugriffsprozess verwendet wird, gemäß dem erfassten Direktzugriffsgrundparameter und dem ausgewählten Kompensationsparameter wie folgt:

der tatsächliche Parameter, der in dem Direktzugriffsprozess verwendet wird = der erfasste Direktzugriffsgrundparameter * der ausgewählte Kompensationsparameter.

6. Vorrichtung nach Anspruch 5, wobei ein tatsächlicher Parameter einen Backoff-Parameter und/oder einen Leistungsanstiegsparameter aufweist.

7. Direktzugriffsparameterbestimmungsvorrichtung, aufweisend:

ein Anzeigemodul, das konfiguriert ist, um anzuzeigen: einen gleichen Direktzugriffsgrundparameter und Kompensationsparameter für den Direktzugriffsgrundparameter für verschiedene einheitliche Zugriffssteuerungskategorien, UACCs,
und eine Zuordnungsbeziehung zwischen einer UACC und dem gleichen Kompensationsparameter zu einer Endbenutzereinrichtung, UE, durch Signalisierung;
wobei der Direktzugriffsgrundparameter, der gleiche Kompensationsparameter und die Zuordnungsbeziehung von der UE verwendet werden, um einen entsprechenden Kompensationsparameter auszuwählen, und einen tatsächlichen Parameter, der in einem Direktzugriffsprozess verwendet wird, gemäß dem Direktzugriffsgrundparameter und dem ausgewählten Kompensationsparameter wie folgt zu berechnen:

der tatsächliche Parameter, der in dem Direktzugriffsprozess verwendet wird = der Direktzugriffsgrundparameter * der ausgewählte Kompensationsparameter.

**Revendications**

1. Procédé de détermination de paramètre d'accès aléatoire, comprenant :

l'acquisition d'un même paramètre de base d'accès aléatoire et paramètre de compensation pour le paramètre de base d'accès aléatoire pour différentes catégories de commande d'accès unifié, UACC, et d'une relation de mappage entre une UACC et le même paramètre de compensation par le biais d'une signalisation ;
la détermination d'une UACC d'un accès actuel ;
la sélection d'un paramètre de compensation correspondant selon l'UACC déterminée et la relation de mappage ; et
le calcul d'un paramètre réel utilisé dans un processus d'accès aléatoire selon le paramètre de base d'accès aléatoire acquis et le paramètre de compensation sélectionné comme suit :

le paramètre réel utilisé dans le processus d'accès aléatoire = le paramètre de base d'accès aléatoire acquis * le paramètre de compensation sélectionné.

2. Procédé selon la revendication 1, dans lequel l'UACC de l'accès actuel est déterminée selon une catégorie de l'UE.

3. Procédé selon la revendication 1, dans lequel un paramètre réel comprend un paramètre de réduction de puissance et/ou un paramètre d'augmentation de puissance.

4. Procédé de détermination de paramètre d'accès aléatoire, comprenant :

l'indication d'un même paramètre de base d'accès aléatoire et paramètre de compensation pour le paramètre de base d'accès aléatoire pour différentes catégories de commande d'accès unifié, UACC, et d'une relation de mappage entre une UACC et le même paramètre de compensation à un équipement utilisateur, UE, de terminal, par le biais d'une signalisation ;
dans lequel le paramètre de base d'accès aléatoire, le même paramètre de compensation et la relation de mappage sont utilisés par l'UE pour sélectionner un paramètre de compensation correspondant, et calculer un paramètre réel utilisé dans un processus d'accès aléatoire selon le paramètre de base d'accès aléatoire et le paramètre de compensation sélectionné comme suit :

le paramètre réel utilisé dans le processus d'accès aléatoire = le paramètre de base d'accès aléatoire * le paramètre de compensation sélectionné.

**5.** Dispositif de détermination de paramètre d'accès aléatoire, comprenant :
un module d'acquisition (82), qui est configuré pour :

acquérir un même paramètre de base d'accès aléatoire et paramètre de compensation pour le paramètre de base d'accès aléatoire pour différentes catégories de commande d'accès unifié, UACC, et une relation de mappage entre une UACC et le même paramètre de compensation par le biais d'une signalisation ; et
un module de détermination (84), qui est configuré pour déterminer :

une UACC d'un accès actuel ;
dans lequel le module de détermination est en outre configuré pour
sélectionner un paramètre de compensation correspondant selon l'UACC déterminée et la relation de mappage ; et
calculer un paramètre réel utilisé dans un processus d'accès aléatoire selon le paramètre de base d'accès aléatoire acquis et le paramètre de compensation sélectionné comme suit :

le paramètre réel utilisé dans le processus d'accès aléatoire = le paramètre de base d'accès aléatoire acquis * le paramètre de compensation sélectionné.

**6.** Dispositif selon la revendication 5, dans lequel un paramètre réel comprend un paramètre de réduction de puissance et/ou un paramètre d'augmentation de puissance.

**7.** Dispositif de détermination de paramètre d'accès aléatoire, comprenant :

un module d'indication, qui est configuré pour indiquer : un même paramètre de base d'accès aléatoire et paramètre de compensation pour le paramètre de base d'accès aléatoire pour différentes catégories de commande d'accès unifié, UACC,
et une relation de mappage entre une UACC et le même paramètre de compensation avec un équipement utilisateur, UE, de terminal, par le biais d'une signalisation ;
dans lequel le paramètre de base d'accès aléatoire, le même paramètre de compensation et la relation de mappage sont utilisés par l'UE pour sélectionner un paramètre de compensation correspondant, et calculer un paramètre réel utilisé dans un processus d'accès aléatoire selon le paramètre de base d'accès aléatoire et le paramètre de compensation sélectionné comme suit :

le paramètre réel utilisé dans le processus d'accès aléatoire = le paramètre de base d'accès aléatoire * le paramètre de compensation sélectionné.

UE             eNB

0）Notifying the terminal to
initiate a random access process

1）Random access preamble

2）Random access response

3）Scheduled transmission

4）Contention resolution

**FIG. 1**

Mobile terminal **10**

| Processor **102** | ⟷ | Transmission device **106** |

Memory **104**

**FIG. 2**

Acquiring a random access basic parameter and/or a compensation parameter for the random access basic parameter, and a mapping relation between a UACC and the random access basic parameter and/or the compensation parameter for the random access basic parameter      S302

Determining an RACH parameter used in a current access process according to the random access basic parameter and/or the compensation parameter for the random access basic parameter and the mapping relation      S304

## FIG. 3

Indicating a random access basic parameter and/or a compensation parameter for the random access basic parameter, and a mapping relation between a UACC and the random access basic parameter and/or the compensation parameter for the random access basic parameter to a terminal UE through signaling, where the random access basic parameter and/or the compensation parameter for the random access basic parameter and the mapping relation are used by the UE to determine an RACH parameter used in a current access process      S402

## FIG. 4

**FIG. 5**

**FIG. 6**

Unified Random
Access Control
Category (RACH
parameter)

Power ramping
Backoff
compensation
parameter

AS

Target received power

PDCCH signaling/RRC

Msg.1

Msg.2

Msg.1

Msg.2

Msg.3

Msg.4

UE

gNB/eNB

**FIG. 7**

Acquisition
module
82

Determination
module
84

**FIG. 8**

**EP 3 691 393 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110274040 A1